Europäisches Patentamt

European Patent Office

Office européen des brevets

(11) Publication number: **0 302 142 B1**

# EUROPEAN PATENT SPECIFICATION

(45) Date of publication of patent specification: **19.02.92**   (51) Int. Cl.⁵: **B60S 3/04**, B08B 1/00

(21) Application number: **87116816.7**

(22) Date of filing: **13.11.87**

(54) **Combined manual implement for window snow removal, ice scraping, washing and drying, for vehicles in general.**

(30) Priority: **04.08.87 IT 2158387**

(43) Date of publication of application:
**08.02.89 Bulletin 89/06**

(45) Publication of the grant of the patent:
**19.02.92 Bulletin 92/08**

(84) Designated Contracting States:
**AT BE CH DE ES FR GB GR IT LI LU NL SE**

(56) References cited:
**DE-A- 2 316 276**
**DE-U- 8 526 223**
**DE-U- 8 607 042**
**US-A- 2 770 826**
**US-A- 2 832 980**

(73) Proprietor: **FRATELLI RE S.p.A.**
**Strada Statale 33 del Sempione 51**
**I-20017 Rho (Milan)(IT)**

(72) Inventor: **Re, Uberto**
**Via Marconi 3**
**I-20017 Rho-Milan(IT)**

(74) Representative: **Giambrocono, Alfonso, Dr. Ing. et al**
**Ing. A. Giambrocono & C. S.r.l. Via Rosolino Pilo 19/B**
**I-20129 Milano(IT)**

## Description

This industrial invention patent relates to a combined manual implement for window snow removal, ice scraping, washing and drying, for vehicles in general.

The most varied means are currently used for removing snow from a vehicle, and these have to be obtained separately by the driver as they are not normally provided with the vehicle. Again, for scrapping ice from windows a suitable scraper also forming a separate implement must be used.

In the published-application DE-A-2 316 276 (corresponding to the preamble of claim 1) there is disclosed a vehicle implement comprising a head carried by a handle, a first seat provided along a longitudinal edge of said head and a second seat provided along the opposite longitudinal edge of the same head, both said seats housing exchangeably cleaning means such as a rubber strip for cleaning glasses, a sponge and/or other desired cleaning devices.

The solution proposed by the prior DE-A-2 316 276 lacks to comprise an ice scraper which:

a) can be used independently of the implement;

b) can be used as a part of said implement; and

c) can be fully contained into the head of the implement for storage.

An object of the present inventions is to provide an implement, to be considered as normal equipment of a vehicle or service station, which enables various cleaning operations to be carried out and is of a conformation which makes it of a practical use and of small overall size.

This and further objects of the invention will be apparent to experts of the art from the description given hereinafter.

The vehicle implement according to the invention is of the type comprising an elongated head of U-shaped cross section associated to a hollow handle, said head having a first seat along a longitudinal edge thereof for receiving a rubber strip and a second seat along the edge of said head opposite said first seat for receiving a brush or a sponge and an ice scraper and is characterised in that said ice scraper has a handgrip and a head, said handgrip of the ice scraper removably fitting within said hollow handle, and said head of the same ice scraper removably fitting within the U-shaped internal space of the elongated head.

According to a further characteristic, the hollow handle of the implement includes connecting means and said ice scraper handgrip includes engagement means, said engagement means and said connecting means interacting with one another

The implement is illustrated by way of example in the figures of the accompanying drawing, in which:

- Figure 1 is a view of the head with the scraper completely extracted;
- Figures 2 and 3 are perspective views of the brush and sponge respectively; and
- Figure 4 is an enlarged side view of the head.

With reference to said figures, the head 1 is located at the end of a hollow handle 2, which is advantageously of telescopic type. The head 1 consists of 2 U-shaped elements 3,3' (Figure 4), the element 3' being contained in the cavity defined by the element 3.

As can be clearly seen from the Figures, the elements 3,3' are clamped together by the action of screws 4, and the longitudinal edges of said elements define a first seat 5 for housing a rubber strip 6 for drying windows and a second seat 7 for housing, as required, a snow removal brush 8 or a sponge 9 for washing windows and/or other vehicle surfaces.

The brush 8 and sponge 9 are inserted into the seat 7 with the screws 3 slackened, and are then locked in position by tightening said screws, the tightening operation causing the two elements 3,3' to approach each other.

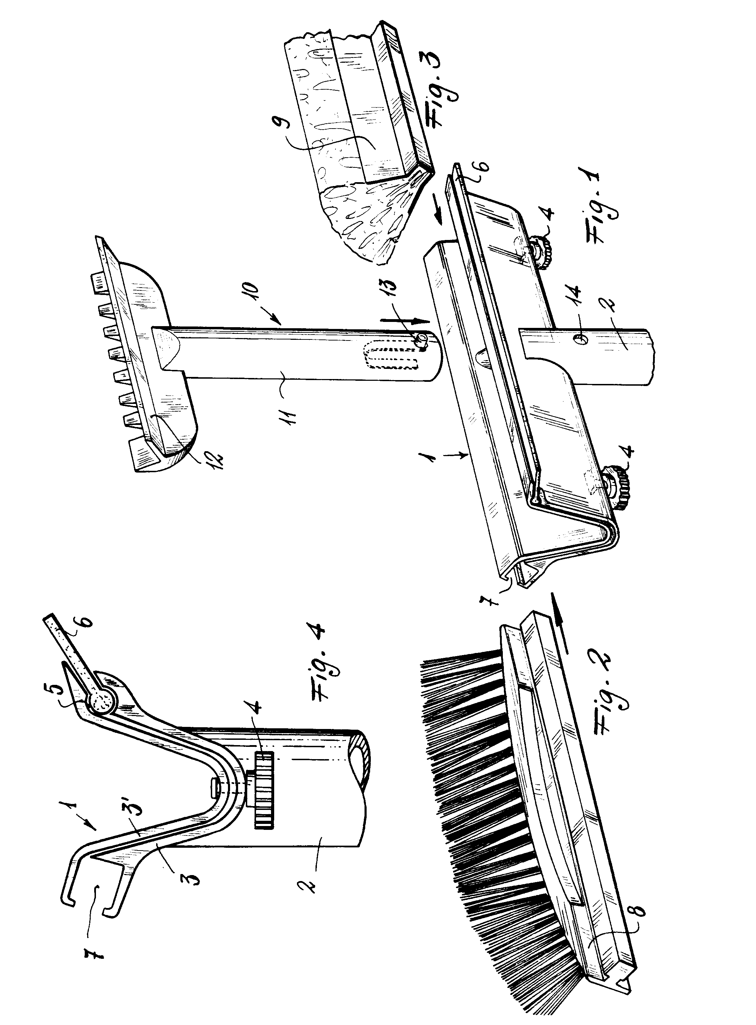

The scraper 10 comprises a handgrip 11, on the top of which there is located the scraper head 12. As can be seen from Figure 1, the handgrip 11 of the scraper 10 penetrates into the hollow handle 2 so that when the scraper is in its non-working position, the head 12 is contained in the cavity defined by the U-shaped elements 3,3'.

An elastic pushbutton 13 provided on the handgrip 11 cooperates with holes 14 (only one shown in Figure 1) provided in the handle 2 so as to lock said scraper 10 in its extracted or working position and in its retracted or non-working position, and also to enable the scraper to be completely removed for use independently of the rest of the implement.

Fitting the scraper to the implement head 1 and providing a telescopic handle enable ice to be also scraped from windows located at a considerable height from the ground, such as in the case of coaches and trailer trucks. This also applies to window drying by means of the rubber strip 6.

The facility for replacing the brush 8 with a sponge 9 is extremely useful, and gives the implement considerable advantages.

## Claims

1. A vehicle implement comprising an elongated head (1) of U-shaped cross-section associated to a hollow handle (2), said head having a first seat (5) along a longitudinal edge thereof for receiving a rubber strip (6) and a second seat (7) along the edge of said head opposite said first seat for receiving a brush or a sponge (8,9) and an ice scraper (10) characterised in that said ice scraper (10) has a handgrip (11) and a head (12), said handgrip (11) of the ice scraper (10) removably fitting within said hollow handle (2), and said head (12) of the same ice scraper removably fitting within the U-shaped internal space of said elongated head.

2. An implement as claimed in claim 1, characterized in that said hollow handle (2) includes connecting means (14) and in that said ice scraper handgrip (11) includes engagement means (13), said engagement means and said connectiong means interacting with one another.

**Revendications**

1. Un appareil pour véhicule comprenant une tête oblongue (1) à section transversale en forme de U associée à un manche creux (2), cette tête ayant un premier siège (5) sur un bord longitudinal de celle-ci destiné à recevoir une bande de caoutchouc (6) et un second siège (7) sur le bord de cette tête opposé au premier siège destiné à recevoir une brosse ou une éponge (8, 9) et un râcleur de glace (10), caractérisé en ce que le râcleur de glace (10) a une poignée (11) et une tête (12), la poignée (11) du râcleur de glace (10) s'adaptant de façon amovible dans le manche creux (2), et la tête (12) du râcleur de glace s'adaptant de façon amovible dans l'espace interne en forme de U de cette tête oblongue.

2. Un appareil suivant revendication 1, caractérisé en ce que le manche creux (2) comprend un moyen de liaison (14) et en ce que la poignée du râcleur de glace (11) comporte un moyen d'engagement (13), ce moyen d'engagement et ce moyen de liaison s'enclenchant ensemble.

**Patentansprüche**

1. Ein Fahrzeugutensil, welches einen länglichen Kopf (1) mit einem U-förmigen Querschnitt umfaßt, wobei dem Kopf ein hohler Handgriff (2) zugeordnet ist, und der Kopf einen ersten Sitz (5) entlang seines Längsrandes zum Aufnehmen eines Gummistreifens (6), einen zweiten Sitz (7) entlang des Randes des Kopfes gegenüber dem ersten Sitz für die Aufnahme einer Bürste oder eines Schwamms (8, 9) und einen Eisschaber (10) aufweist, **dadurch gekennzeichnet,** daß der Eisschaber (10) einen Handgriff (11) und einen Kopf (12) aufweist, wobei der Handgriff (11) des Eisschabers (10) abnehmbar innerhalb des hohlen Handgriffs (2) eingepaßt ist, und der Kopf (12) desselben Eisschabers abnehmbar innerhalb des U-förmigen Innenraums des länglichen Kopfes eingepaßt ist.

2. Ein Utensil nach Anspruch 1, **dadurch gekennzeichnet,** daß der hohle Handgriff (2) eine Verbindungseinrichtung (14) enthält, und daß der Eisschaberhandgriff (11) eine Eingriffseinrichtung (13) enthält, wobei die Eingriffseinrichtung und die Verbindungseinrichtung miteinander in Wechselwirkung treten.

Fig. 4

Fig. 2

Fig. 3

Fig. 1

EP 0 302 142 B1